# EUROPEAN PATENT SPECIFICATION

(11) **EP 4 521 071 B1**
(45) Date of publication and mention of the grant of the patent: **11.11.2026**
(21) Application number: 24199869.9
(22) Date of filing: 11.09.2024
(51) Int. Cl.: G01D 18/00, G01D 5/26

(54) **OPTICAL SYSTEM WITH SINGLE CHANNEL OPTICAL COEFFICIENT DATA**
OPTISCHES SYSTEM MIT EINKANALIGEN DATEN OPTISCHER KOEFFIZIENTEN
SYSTEME OPTIQUE AVEC DONNÉES DE COEFFICIENT OPTIQUE À CANAL UNIQUE

(30) Priority: 11.09.2023 US 202318244582
(43) Date of publication of application: 12.03.2025
(73) Proprietor: Simmonds Precision Products, Inc., Vergennes, VT 05491 (US)
(72) Inventor: DEWIND, Eric M., Richmond, 05477 (US)
(74) Representative: Maiwald GmbH

(56) References cited:
- US-B2- 10 184 852
- US-B2- 10 768 055
- US-B2- 7 027 136

## Description

### BACKGROUND

### 1. Field

The present disclosure relates to optical systems, and more particularly to optical sensors such as optical sensors utilizing Fabry-Perot cavity interferometry for mechanical strain, temperature, and/or pressure measurements.

### 2. Description of Related Art

Fiber optic sensors (FOS) including, but not limited to fiber Bragg gratings (FBGs) and Fabry-Perot interferometers (FPIs) are used for many applications due to their small size, corrosion resistance, and immunity to electromagnetic interference. FOS can be used to sense numerous physical phenomena including temperature, strain, and pressure.

The response from the FOS to measurands depend on sensor construction. Even tight manufacturing tolerance specifications do not always allow for conversion into engineering units to the required accuracy. Therefore, separate coefficients for each sensor are required to convert optical signal indicators into useful engineering units. In some applications it may be sufficient to store the coefficients in a database in the optical interrogator system. However, this means updating the database when a FOS is added or replaced. This procedure is prone to error and in some cases, such as high design assurance aerospace applications, not always possible. Therefore, encoding the coefficients with the sensor itself and having the optical interrogator system interpret and apply the coefficients has been a suggested solution. Additionally, to reduce hardware costs it is desirable for the coefficient data to be received using the same components as the optical sensor. However, with traditional techniques, it is difficult to sufficiently separate and reconstruct the coefficient FBG reflections from the optical sensor reflections after they are combined.

The conventional techniques have been considered satisfactory for their intended purpose. However, there is an ever-present need for improved systems and methods for encoding data into optical sensors and for reconstructing the data from the optical sensors. This disclosure provides a solution for this need.

US 10,184,852 B2 discloses a sensor network having a series arrangement of fibercoupled, reflective sensors. US 10,768,055 B2 discloses a method for calibrating fiber Bragg grating based fiber optic overheat systems to monitor a plurality of zones of an aircraft includes a line replaceable unit, a first interrogator, and a controller. US 7,027,136 B2 discloses a structure analysis and defect detection system in which a laser light source provides light via optical fiber to fiber Bragg gratings that change resonant frequency as stresses change in the structure.

### SUMMARY

According to an aspect of the present invention, there is provided a system as claimed in claim 1.

The interrogator can have a CPU with a speed and a clock cycle, wherein the speed of the CPU is inverse of the clock cycle. The delay span can have a length that is long enough to delay the sensor returns from the optical sensor to arrive at the interrogator after the FBG returns by at least a span of time of two times the clock cycle.

The optical sensor can include a Fabry-Perot interferometer.

The optic fiber can be connected to a single channel of the interrogator. Calibration coefficient data can be encoded in the FBGs whose reflections are separated in wavelength space. Spacings between consecutive FBGs in wavelength space can represent two ON bits separated by some number of OFF bits corresponding to the spacings. A single FBG of the FBGs can denote a start of encoding which allows a first bit to be an OFF bit. All the FBGs can be strain isolated and can be configured to be isothermal with one another.

According to an aspect of the present invention, there is provided a method as claimed in claim 5.

The delay span may have a length that is long enough to delay the sensor returns from the optical sensor to arrive at the first end after the FBG returns by at least a span of time of two times a clock cycle of a CPU operatively connected to the first end.

The optic fiber may be connected to a single channel of an interrogator, wherein calibration coefficient data is encoded in the FBGs whose reflections are separated in wavelength space, wherein spacings between consecutive FBGs in wavelength space represent two ON bits separated by some number of OFF bits corresponding to the spacings, wherein a single FBG of the FBGs denotes a start of encoding which allows a first bit to be an OFF bit, and wherein all the FBGs are strain isolated and are configured to be isothermal with one another, and the method may further comprise using bits from the FBGs to derive one or multiple calibration coefficients.

The method may further comprise after interrogating the optical sensor for a series of differing wavelengths, resetting cumulative error by shutting off the laser for a sufficient time to clear the sensor returns and start interrogating the optical sensor for another series of differing wavelengths.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:

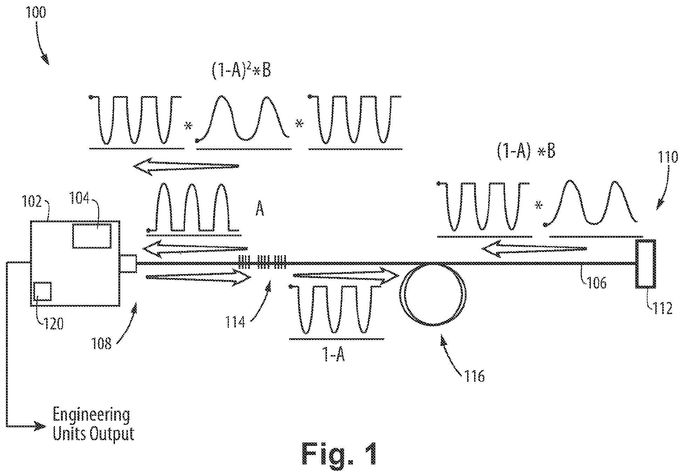

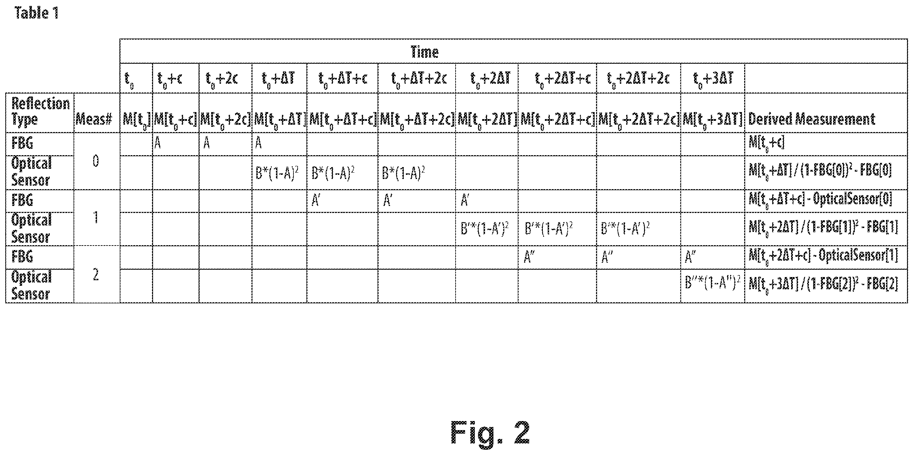

Fig. 1 is a schematic view of an embodiment of a system constructed in accordance with the present disclosure, showing the interrogator, the single optic fiber, and the optical sensor; and fiber Bragg gratings (FBGs) of the fiber; and
TABLE 1 shows FGB and optical sensor derivations over time for the system of Fig. 1.

### DETAILED DESCRIPTION OF THE PREFERRED EMBODIMENTS

Reference will now be made to the drawings wherein like reference numerals identify similar structural features or aspects of the subject disclosure. For purposes of explanation and illustration, and not limitation, a partial view of an embodiment of a system in accordance with the disclosure is shown in Fig. 1 and is designated generally by reference character 100. Other embodiments of systems in accordance with the disclosure, or aspects thereof, are provided in TABLE 1, as will be described. The systems and methods described herein can be used to receive the coefficient data along with sensor measurement data from a single optical channel (e.g., a single photodetector).

The system 100 includes an interrogator 102 including an illuminator 104. A single optic fiber 106 has a length between a first end 108 and a second end 110. The first end 108 is operatively connected to the illuminator 104 for transmitting illumination along the length of the optic fiber 106. An optical sensor 112 is operatively connected to the second end 110 for reflecting sensor returns of the illumination back along the length of the optic fiber 106 to the interrogator 102. A set of fiber Bragg grating (FBGs) 114 is formed in the optic fiber 106 between the first end 108 and the optical sensor 112. The FBGs 114 are configured for reflecting FBG returns of the illumination back the relatively short distance along the optic fiber 106 to the interrogator 102 optically connected to the first end 108. A delay span 116 is included in the optic fiber 106 between the FBGs 114 and the optical sensor 112. The delay span 116 can be a arranged in a coil or other routing of a length of the optic fiber 106.

The interrogator 102 is operatively connected to the first end 108 of the optic fiber 106 to receive the sensor returns B and the FBG returns A from the optic fiber 106. The delay span 116 has a length along the fiber 106 that is configured to create a delay between when the interrogator 102 receives the FBG returns A and when the interrogator 102 receives the sensor return B. The interrogator 102 can convert a combination of the FBG returns A and the sensor returns B into engineering units. The combined FGB returns A and sensor returns B arrive at the interrogator 102 as a combined signal (1-A)²*B. The interrogator 102 can output the engineering units as actionable output 118 indicative of a measurement of a measurand at the optical sensor. The actionable output 118 can be displayed visually or communicated audibly to an end user through a user interface, or can be issued, e.g., as digital feedback to a control system for controlling physical behavior, e.g., of an aircraft engine or other onboard system, based on feedback indicative of the measurand. The engineering units can be units for mechanical strain, temperature, and/or pressure.

The interrogator 102 has a CPU 120 with a speed and a clock cycle, wherein the speed of the CPU is inverse of the clock cycle. The interrogator 102 and the optic fiber 106 are correlated to one another in that the delay span 116 has a length that is long enough to delay the sensor returns A from the optical sensor 112 to arrive at the interrogator after the FBG returns A by at least a span of time of two times the clock cycle of the CPU 120. The interrogator 102 is configured to preform methods as disclosed herein, e.g., by including machine readable instructions, solid state logic, analog circuitry, or the like, configured to cause the interrogator to perform the methods.

The optical sensor 112 includes a Fabry-Perot interferometer, and the illuminator 104 includes a tunable laser. The interrogator 102 is operatively connected to control the tunable laser to interrogate the optical sensor 112 over a series of differing illumination wavelengths. The interrogator 102 is configured to receive the FBG returns A and the sensor returns B for each of the differing illumination wavelengths to form the engineering units as output, as further described below with reference to Table 1.

The FBGs 114 are configured to include encoded data. The interrogator 102 is configured to decode the encoded data based on the FBG returns A. The encoded data includes calibration coefficient data for the optical sensor, among potentially other types of data. The interrogator 102 uses the coefficient calibration data in converting the senor returns B into the engineering units. More specifically, the interrogator 102 is configured to use the calibration data in converting the combination of the FBG returns and the sensor returns, i.e., (1-A)²*B, into the engineering units.

The interrogator 102 separates coefficient data from optical sensor data. This includes measuring the FBG returns A arriving at the interrogator 102 before the sensor returns B due to the length the delay span 116. The method includes measuring a combination, i.e., (1-A)²*B, of the sensor returns B and the FBG returns A at some time after first measuring of the FBG returns A arriving before the sensor returns B. When the sensor returns B arrive, they have had to pass through the FBGs 114, so the interrogator 102 actually receives the sensor returns B combined together with the FBG returns A as a combined return (1-A)²*B. The interrogator 102 corrects to isolate the sensor returns B from the combined return (1-A)²*B. This correcting includes saving the measured FBG returns A obtained at the interrogator 102 before the sensor returns A arrive, and using the saved FBG returns A to isolate the sensor returns B from the combined return (1-A)²*B.

The optic fiber 106 is connected to a single channel of the interrogator 102, so the sensing and calibrating can be performed on a single optical channel. Calibration coefficient data is encoded in the FBGs 114 whose reflections are separated in wavelength space from one another. Spacings between consecutive FBGs 114 in wavelength space can represent two ON bits separated by some number of OFF bits corresponding to the spacings. A single FBG of the FBGs 114 can denote a start of encoding which allows a first bit to be an OFF bit. All the FBGs 114 are strain isolated and are configured to be isothermal with one another, ensuring that their spacing remains constant even as their central wavelength changes. The resulting bits can be used to derive one or multiple coefficients, i.e., calibration coefficients for converting data in the sensor returns B into the engineering units. The coefficients can be encoded in a number of ways including unsigned integers, two's complement, floating point, or the like.

With reference now to TABLE 1 (where reference numbers continue to refer to Fig. 1), the interrogator 102 receives the reflection from the FBGs 114, then sometime after traveling past the FBGs 114 and through the length of fiber 106, the light that was transmitted through the FBGs 114 encounters the optical sensor 112. The reflection from the optical sensor 112 will then return through the length of fiber 106, back through the FBGs 114 and received by the interrogator 102. Assuming the length of fiber 106, i.e., including the delay span 116, separating the FBGs 114 from the optical sensor 112 is sufficiently long, the time ΔT between the initial FBG reflection and the time when optical sensor reflection (coupled with the FBG transmittance) is received by the interrogator 102 can be greater than at least two CPU clock cycles. In other words, the first return from the optical sensor 112 arrives ΔT after the first return from the FBGs 114, wherein ΔT is at least two CPU clock cycles worth of time. Therefore, the intensity after one CPU clock t_0+c (assuming the length of fiber between the interrogator 102 and FBGs 104 is relatively small), will be the intensity from the FBG reflection A and the intensity at time t_0+ΔT+c will be the intensity of the FBG reflection plus the intensity of the optical sensor reflection multiplied by the square of the FBG transmittance intensity (1-A)²*B. After the optical sensor measurement is received and computed, the tunable laser of the illuminator104 lases to the next wavelength. When the next wavelength (Meas# 1 in TABLE 1) of light is emitted and reflected from the FBGs 114, the interrogator 102 is still be receiving the optical sensor reflection associated with the previous wavelength (Meas# 0 in TABLE 1). This value can be estimated based on previous measurements and removed to obtain the FBG reflection A'. The derivations for the FBG and Optical Sensor measurements for three wavelengths (Meas# 0, 1, and 2) can be found in TABLE 1 in the Derived Measurements column. Due to losses in the fiber 106 and in the optical sensor 112, error will accumulate while deriving successive measurements. Therefore, it is beneficial to periodically turn off the laser thus clearing the error starting with the pure 'A' reflection again. After interrogating the optical sensor for a series of differing wavelengths, the interrogator 102 can reset cumulative error by shutting off the laser for a sufficient time to clear the sensor returns and start interrogating the optical sensor 112 for another series of differing wavelengths.

The FBGs 114 are inscribed such that the spacing between FBGs 114 in wavelength space encodes one or more coefficients. A single FBG represents an 'on' bit while the spacing between consecutive FBGs 114 represents some number of 'off' bits. The waveband that the coefficient encoding utilizes is known so that the number of trailing 'off' bits after the final FBG can be inferred. A single reference FBG can be encoded to denote the start of the coefficient data such that the spacing between the reference FBG and the first coefficient FBG represent some number of leading "off" bits.

Systems and methods as disclosed herein provide potential benefits including the following. They can provide the ability to convert optical signal indicators into engineering units such as temperature, strain, and pressure without storing coefficient data in a central location. This allows sensors to be added and replaced without additional software or database updates to the optical interrogator system. This can also allow coefficient data and optical sensor data to be derived using the same optical channel.

The methods and systems of the present disclosure, as described above and shown in the drawings, provide for receiving coefficient data along with sensor measurement data from a single optical channel (e.g., a single photodetector). While the apparatus and methods of the subject disclosure have been shown and described with reference to preferred embodiments, those skilled in the art will readily appreciate that changes and/or modifications may be made thereto without departing from the scope of the subject disclosure, which is defined by the appended claims.

## Claims

1. A system (100) comprising:
an illuminator (104) including a tunable laser;
an optic fiber (106) having a length between a first end (108) of the optic fiber and a second end (110) of the optic fiber, wherein the first end is operatively connected to the illuminator for transmitting illumination along the length of the optic fiber;
an optical sensor (112) operatively connected to the second end for reflecting sensor returns of the illumination back along the length of the optic fiber;
a set of fiber Bragg gratings (114), FBGs, formed in the optic fiber between the first end (108) and the optical sensor (112),
wherein the FBGs are configured for reflecting FBG returns of the illumination back along the optic fiber to the first end;
a delay span (116) in the optic fiber between the FBGs (114) and the optical sensor; and
a interrogator (102) operatively connected to the first end to receive the sensor returns and the FBG returns from the optic fiber, wherein the delay span has a length along the fiber that is configured to create a delay between when the interrogator receives the FBG returns and when the interrogator receives the sensor return, wherein:
the interrogator (102) is operatively connected to the tunable laser to control the tunable laser to interrogate the optical sensor over a series of differing illumination wavelengths,
the interrogator (102) is configured to receive the FBG returns and the sensor returns for each of the differing illumination wavelengths to form engineering units as output;
the FBGs are configured to include encoded data including calibration coefficient data for the optical sensor, and the interrogator (102) is configured to decode the encoded data based on the FBG returns and use the calibration data to convert a combination of the FBG returns and the sensor returns into the engineering units as output indicative of a measurement of a measurand at the optical sensor (112);
and the system is **characterised in that** the interrogator (102) is configured to perform a method for separating calibration coefficient data from optical sensor data, wherein the method includes:
measuring the FBG returns arriving at the interrogator before the sensor returns due to the length of the delay span;
measuring a combination of the sensor returns and the FBG returns at some time after the measuring of the FBG returns arriving before the sensor returns; and
correcting to isolate the sensor returns from the combination of the sensor returns and the FBG returns, wherein the correcting includes using the measuring of the FBG returns arriving at the interrogator (102) before the sensor returns to isolate the sensor returns.

2. The system as recited in claim 1, wherein the interrogator (102) has a CPU with a speed and a clock cycle, wherein the speed of the CPU is inverse of the clock cycle, wherein the delay span has a length that is long enough to delay the sensor returns from the optical sensor to arrive at the interrogator after the FBG returns by at least a span of time of two times the clock cycle.

3. The system as recited in claim 1 or 2, wherein the optical sensor includes a Fabry-Perot interferometer.

4. The system as recited in any preceding claim, wherein the optic fiber is connected to a single channel of the interrogator (102), wherein calibration coefficient data is encoded in the FBGs whose reflections are separated in wavelength space, wherein spacings between consecutive FBGs in wavelength space represent two ON bits separated by some number of OFF bits corresponding to the spacings, wherein a single FBG of the FBGs denotes a start of encoding which allows a first bit to be an OFF bit, and wherein all the FBGs are strain isolated and are configured to be isothermal with one another.

5. A method comprising:
illuminating a first end of an optic fiber (106), wherein illumination is first incident upon a set of fiber Bragg gratings (114), FBGs, then passes through a delay span of the fiber, then reflects off of an optical sensor (112) at a second end of the optic fiber;
receiving an FBG return reflected from the FBGs at the first end of the optic fiber before arrival at the first end of a sensor return reflected from the optical sensor;
receiving a combined return including the FBG return and the sensor return;
converting a combination of the FBG returns and the sensor returns into engineering units indicative of a measurement of a measurand at the optical sensor; and
outputting the engineering units;
wherein the illumination is produced by an illuminator (104) that includes a tunable laser, and the method comprises controlling the tunable laser to interrogate the optical sensor over a series of differing illumination wavelengths; and receiving the FBG returns and the sensor returns for each of the differing illumination wavelengths to form the engineering units as output; and
wherein the FBGs are configured to include encoded data that includes calibration coefficient data for the optical sensor, and the method comprises decoding the encoded data to obtain the calibration coefficient data based on the FBG returns and using the calibration coefficient data in converting the combination of the FBG returns and the senor returns into the engineering units;
and wherein the method is **characterised in that** it comprises a method for separating calibration coefficient data from optical sensor data, including:
measuring the FBG returns received before the sensor returns due to the length of the delay span:
measuring a combination of the sensor returns and the FBG returns received at some time after the measuring of the FBG returns arriving before the sensor returns; and
correcting to isolate the sensor returns from the combination of the sensor returns and the FBG returns, wherein the correcting includes using the measuring of the FBG returns arriving before the sensor returns to isolate the sensor returns.

## Patentansprüche

1. Ein System (100), umfassend:
eine Lichtquelle (104) mit einem stimmbaren Laser;
eine optische Faser (106) mit einer Länge zwischen einem ersten Ende (108) der optischen Faser und einem zweiten Ende (110) der optischen Faser, wobei das erste Ende funktionsfähig mit der Lichtquelle verbunden ist, um Licht entlang der Länge der optischen Faser zu übertragen;
einen optischen Sensor (112), der funktionsfähig mit dem zweiten Ende verbunden ist, um Sensorreflexionen des Lichts entlang der Länge der optischen Faser zurückzuwerfen;
einen Satz von Faser-Bragg-Gittern (114), FBGs, die in der optischen Faser zwischen dem ersten Ende (108) und dem optischen Sensor (112) ausgebildet sind, wobei die FBGs so konfiguriert sind, dass sie FBG-Reflexionen des Lichts entlang der optischen Faser zum ersten Ende zurückwerfen;
eine Verzögerungsstrecke (116) in der optischen Faser zwischen den FBGs (114) und dem optischen Sensor; und
ein Abfragegerät (102), das funktionsmäßig mit dem ersten Ende verbunden ist, um die Sensorreflexionen und die FBG-Reflexionen aus der optischen Faser zu empfangen, wobei die Verzögerungsstrecke eine Länge entlang der Faser aufweist, die so ausgelegt ist, dass sie eine Verzögerung zwischen dem Zeitpunkt, zu dem das Abfragegerät die FBG-Reflexionen empfängt, und dem Zeitpunkt, zu dem das Abfragegerät das Sensorreflexionen empfängt, erzeugt, wobei:
das Abfragegerät (102) funktionsmäßig mit dem stimmbaren Laser verbunden ist, um den stimmbaren Laser so zu steuern, dass er den optischen Sensor über eine Reihe unterschiedlicher Beleuchtungswellenlängen abfragt,
das Abfragegerät (102) so konfiguriert ist, dass es die FBG-Reflexionen und die Sensorreflexionen für jede der unterschiedlichen Beleuchtungswellenlängen empfängt, um technischen Einheiten als Ausgabe zu bilden;
die FBGs so konfiguriert sind, dass sie kodierte Daten enthalten, einschließlich Kalibrierungskoeffizientendaten für den optischen Sensor, und das Abfragegerät (102) so konfiguriert ist, dass es die kodierten Daten auf der Grundlage der FBG-Reflexionen dekodiert und die Kalibrierungsdaten verwendet, um eine Kombination aus den FBG-Reflexionen und der Sensorreflexionen in technische Einheiten umzuwandeln, als ein Ausgangssignal, das eine Messung einer Messgröße am optischen Sensor (112) angibt, und das System **dadurch gekennzeichnet ist, dass** das Abfragegerät (102) so konfiguriert ist, dass es ein Verfahren zur Trennung von Kalibrierungskoeffizientendaten von optischen Sensordaten durchführt, wobei das Verfahren umfasst:
Messen der FBG-Reflexionen, die aufgrund der Verzögerungsstrecke vor den Sensorreflexionen beim Abfragegerät eintreffen;
Messen einer Kombination aus den Sensorreflexionen und den FBG-Reflexionen zu einem Zeitpunkt nach dem Messen der FBG-Reflexionen, die vor den Sensorreflexionen eintreffen; und
eine Korrektur, um die Sensorreflexionen aus der Kombination der Sensorreflexionen und der FBG-Reflexionen zu isolieren, wobei die Korrektur die Verwendung der Messung der FBG-Reflexionen, die vor den Sensorreflexionen beim Abfragegerät (102) eintreffen, umfasst, um die Sensorreflexionen zu isolieren.

2. System nach Anspruch 1, wobei die Abfragegerät (102) eine CPU mit einer Geschwindigkeit und einem Taktzyklus aufweist, wobei die Geschwindigkeit der CPU der Kehrwert des Taktzyklus ist, wobei die Verzögerungsstrecke eine Länge aufweist, die lang genug ist, um die Sensorreflexionen vom optischen Sensor so zu verzögern, dass sie erst nach den FBG-Reflexionen bei dem Abfragegerät, und zwar um mindestens eine Zeitspanne eintreffen, die dem Zweifachen des Taktzyklus entspricht.

3. System nach Anspruch 1 oder 2 wobei der optische Sensor ein Fabry-Perot-Interferometer umfasst.

4. System nach einem der vorstehenden Ansprüche, wobei die optische Faser mit einem einzelnen Kanal des Abfragegeräts (102) verbunden ist, wobei Kalibrierungskoeffientendaten in den FBGs kodiert sind, deren Reflexionen im Wellenlängenraum getrennt sind, wobei Abstände zwischen aufeinanderfolgenden FBGs im Wellenlängenraum zwei "ON"-Bits darstellen, die durch eine den Abständen entsprechende Anzahl von "OFF"-Bits voneinander getrennt sind, wobei ein einzelnes FBG der FBGs einen Beginn der Kodierung kennzeichnet, wodurch ein erstes Bit ein "OFF"-Bit sein kann, und wobei alle FBGs spannungsisoliert und so konfiguriert sind, dass sie untereinander isotherm sind.

5. Verfahren, umfassend:
Beleuchten eines ersten Endes einer optischen Faser (106), wobei das Licht zunächst auf eine Gruppe von Faser-Bragg-Gittern (114), FBGs, trifft, dann durch eine Verzögerungsstrecke der Faser hindurchtritt und anschließend von einem optischen Sensor (112) an einem zweiten Ende der optischen Faser reflektiert wird;
Empfangen eines von den FBGs am ersten Ende der optischen Faser reflektierten FBG-Reflexionen, bevor eine vom optischen Sensor reflektierte Sensorreflexion am ersten Ende eintrifft;
Empfangen einer kombinierten Reflexion, welche die FBG-Reflexion und die Sensorreflexion enthält;
Umwandeln einer Kombination aus den FBG-Reflexion und den Sensorreflexion in technische Einheiten, die einen Messwert einer Messgröße am optischen Sensor angeben; und
Ausgeben der technischen Einheiten;
wobei die Beleuchtung durch eine Lichtquelle (104) erzeugt wird, die einen stimmbaren Laser umfasst, und das Verfahren das Ansteuern des stimmbaren Lasers, um den optischen Sensor über eine Reihe unterschiedlicher Beleuchtungswellenlängen abzufragen; und das Empfangen der FBG-Reflexionen und der Sensorreflexionen für jede der unterschiedlichen Beleuchtungswellenlängen, um die technischen Einheiten als Ausgabe zu bilden umfasst; und
wobei die FBGs so konfiguriert sind, dass sie kodierte Daten enthalten, die Kalibrierungskoeffizientendaten für den optischen Sensor umfassen, und das Verfahren das Dekodieren der kodierten Daten umfasst, um die Kalibrierungskoeffizientendaten auf der Grundlage der FBG-Reflexionen zu erhalten, und die Verwendung der Kalibrierungskoeffizientendaten bei der Umwandlung der Kombination aus den FBG-Reflexionen und den Sensorreflexionen in technische Einheiten umfasst;und
wobei das Verfahren **dadurch gekennzeichnet ist, dass** es ein Verfahren zum Trennen von Kalibrierungskoeffizientendaten von optischen Sensordaten umfasst, einschließlich:
Messen der FBG-Reflexionen, die aufgrund der Verzögerungsstrecke vor den Sensorreflexionen beim Abfragegerät eintreffen;
Messen einer Kombination aus den Sensorreflexionen und den FBG-Reflexionen zu einem Zeitpunkt nach dem Messen der FBG-Reflexionen, die vor den Sensorreflexionen eintreffen; und
eine Korrektur, um die Sensorreflexionen aus der Kombination der Sensorreflexionen und der FBG-Reflexionen zu isolieren, wobei die Korrektur die Verwendung der Messung der FBG-Reflexionen, die vor den Sensorreflexionen eintreffen, zur Isolierung der Sensorreflexionen umfasst.

## Revendications

1. Système (100) comprenant :
un illuminateur (104) comprenant un laser accordable ;
une fibre optique (106) ayant une longueur entre une première extrémité (108) de la fibre optique et une seconde extrémité (110) de la fibre optique, dans lequel la première extrémité est connectée à l'illuminateur de manière opérationnelle afin de transmettre un éclairage le long de la longueur de la fibre optique ;
un capteur optique (112) connecté à la seconde extrémité de manière opérationnelle afin de réfléchir des retours de capteur de l'éclairage en arrière le long de la longueur de la fibre optique ;
un ensemble de réseaux de Bragg sur fibre (FBG) (114), formés dans la fibre optique entre la première extrémité (108) et le capteur optique (112), dans lequel les FBG sont configurés pour réfléchir des retours de FBG de l'éclairage en arrière le long de la fibre optique jusqu'à la première extrémité ;
une marge de retard (116) dans la fibre optique entre les FBG (114) et le capteur optique ; et
un interrogateur (102) connecté à la première extrémité de manière opérationnelle afin de recevoir les retours de capteur et les retours de FBG provenant de la fibre optique, dans lequel la marge de retard a une longueur le long de la fibre qui est configurée pour créer un retard entre le moment où l'interrogateur reçoit les retours de FBG et le moment où l'interrogateur reçoit le retour de capteur, dans lequel :
l'interrogateur (102) est connecté de manière fonctionnelle au laser accordable afin de commander au laser accordable d'interroger le capteur optique sur une série de différentes longueurs d'onde d'éclairage,
l'interrogateur (102) est configuré pour recevoir les retours de FBG et les retours de capteur pour chacune des différentes longueurs d'onde d'éclairage afin de former des unités techniques en sortie ;
les FBG sont configurés pour comporter des données codées comportant des données de coefficient d'étalonnage pour le capteur optique, et l'interrogateur (102) est configuré pour décoder les données codées sur la base des retours de FBG et utiliser les données d'étalonnage pour convertir une combinaison des retours de FBG et des retours de capteur en unités techniques en sortie indicatives d'une mesure d'un mesurande au niveau du capteur optique (112) ;
et le système est **caractérisé en ce que** l'interrogateur (102) est configuré pour mettre en œuvre un procédé de séparation des données de coefficient d'étalonnage provenant du capteur optique, dans lequel le procédé comprend de :
mesurer les retours de FBG arrivant à l'interrogateur avant les retours de capteur en raison de la longueur de la marge de retard ;
mesurer une combinaison des retours de capteur et des retours de FBG un certain laps de temps après la mesure des retours de FBG arrivant avant les retours de capteur ; et
effectuer une correction afin d'isoler les retours de capteur de la combinaison des retours de capteur et des retours de FBG, dans lequel la correction comprend d'utiliser la mesure des retours de FBG arrivant à l'interrogateur (102) avant les retours de capteur afin d'isoler les retours de capteur.

2. Système selon la revendication 1, dans lequel l'interrogateur (102) a une CPU avec une vitesse et un cycle d'horloge, dans lequel la vitesse de la CPU est l'inverse du cycle d'horloge, dans lequel la marge de retard a une longueur qui est suffisamment grande pour retarder les retours de capteur provenant du capteur optique afin d'arriver à l'interrogateur après les retours de FBG avec au moins une marge de temps égale à deux fois le cycle d'horloge.

3. Système selon la revendication 1 ou 2, dans lequel le capteur optique comprend un interféromètre de Fabry-Pérot.

4. Système selon l'une quelconque des revendications précédentes, dans lequel la fibre optique est connectée à un seul canal de l'interrogateur (102), dans lequel des données de coefficient d'étalonnage sont codées dans les FBG dont les réflexions sont séparées dans l'espace des longueurs d'onde, dans lequel des espacements entre des FBG consécutifs dans l'espace des longueurs d'onde représentent deux bits à 1 séparés par un certain nombre de bits à 0 correspondant aux espacements, dans lequel un seul FBG des FBG représente un début de codage qui permet à un premier bit d'être un bit à 0, et dans lequel tous les FBG sont isolés des contraintes et sont configurés pour être isothermes les uns par rapport aux autres.

5. Procédé comprenant de :
éclairer une première extrémité d'une fibre optique (106), dans lequel un éclairage est d'abord incident sur un ensemble de réseaux de Bragg sur fibre (FBG) (114), puis passe à travers avec une marge de retard de la fibre, puis se réfléchit à partir d'un capteur optique (112) à une seconde extrémité de la fibre optique ;
recevoir un retour de FBG réfléchi à partir des FBG à la première extrémité de la fibre optique avant l'arrivée à la première extrémité d'un retour de capteur réfléchi à partir du capteur optique ;
recevoir un retour combiné comprenant le retour de FBG et le retour de capteur ;
convertir une combinaison des retours de FBG et des retours de capteur en unités techniques indicatives d'une mesure d'un mesurande au niveau du capteur optique ; et
générer les unités techniques en sortie ;
dans lequel l'éclairage est produit par un illuminateur (104) qui comprend un laser accordable, et le procédé comprend de commander au laser accordable d'interroger le capteur optique sur une série de différentes longueurs d'onde d'éclairage ; et de recevoir les retours de FBG et les retours de capteur pour chacune des différentes longueurs d'onde d'éclairage afin de former les unités techniques en sortie ; et
dans lequel les FBG sont configurés pour comporter des données codées qui comportent des données de coefficient d'étalonnage pour le capteur optique, et le procédé comprend de décoder les données codées afin d'obtenir les données de coefficient d'étalonnage sur la base des retours de FBG et utiliser les données de coefficient d'étalonnage en convertissant la combinaison des retours de FBG et des retours de capteur en unités techniques ;
et dans lequel le procédé est **caractérisé en ce qu'**il comprend un procédé de séparation des données de coefficient d'étalonnage des données de capteur optique, comprenant de :
mesurer les retours de FBG reçus avant les retours de capteur en raison de la longueur de la marge de retard ;
mesurer une combinaison des retours de capteur et des retours de FBG reçus un certain laps de temps après la mesure des retours de FBG arrivant avant les retours de capteur ; et
effectuer une correction afin d'isoler les retours de capteur de la combinaison des retours de capteur et des retours de FBG, dans lequel la correction comprend d'utiliser la mesure des retours de FBG arrivant avant les retours de capteur afin d'isoler les retours de capteur.
